# EUROPEAN PATENT SPECIFICATION

(11) **EP 1 697 937 B1**
(45) Date of publication and mention of the grant of the patent: **05.06.2013**
(21) Application number: 04807331.6
(22) Date of filing: 14.12.2004
(51) Int. Cl.: G11B 20/10, G06F 3/06, G06F 13/38, H04N 5/91, H04N 5/92, H04N 7/16

(54) **CONTROL APPARATUS, VIDEO PROCESSING APPARATUS, AND CONTROL METHOD THEREOF**
STEUERVORRICHTUNG, VIDEOVERARBEITUNGSVORRICHTUNG UND STEUERVERFAHREN DAFÜR
DISPOSITIF DE COMMANDE, APPAREIL DE TRAITEMENT VIDEO ET PROCEDE DE COMMANDE POUR CET APPAREIL

(30) Priority: 17.12.2003 JP 2003420201
(43) Date of publication of application: 06.09.2006
(73) Proprietor: CANON KABUSHIKI KAISHA, Ohta-ku Tokyo 146-8501 (JP)
(72) Inventor: KOYAMA, Shin-ichi, CANON KABUSHIKI KAISHA, Tokyo 146-8501 (JP)
(74) Representative: Hitching, Peter Matthew
(86) International application number: PCT/JP2004/018974
(87) International publication number: WO 2005/059916

(56) References cited:
- EP-A2- 1 024 493
- EP-A2- 1 052 574
- EP-A2- 1 441 535
- JP-A- 2000 324 143
- JP-A- 2004 228 757
- 'AV/C Digital Interface Command Set General Specification Version 3.0' 1394TA, [Online] 15 April 1998, XP002111053 Retrieved from the Internet: <URL:http://www.1394ta.org>
- 'AV/C Tape Recorder/Player Subunit Specification. Version 2.1' 1394TA, [Online] 26 January 1999, page DIV, XP002987577 Retrieved from the Internet: <URL:http://www.1394ta.org>
- 'Enhancements to the AV/C Tape Recorder/Player Subunit Specification. Version 2.1' 1394TA, [Online] 05 October 1999, pages 1 - 15, XP002987578 Retrieved from the Internet: <URL:http://www.1394ta.org>

## Description

### TECHNICAL FIELD

The present invention relates to a video processing apparatus which outputs data in a plurality of kinds of data formats from one digital interface, a control apparatus which controls the video processing apparatus, and so on.

### BACKGROUND ART

For example, Japanese Patent Laid-Open No. 2001-275076 proposes a method of recording HD (High Definition) video data based on MPEG2 standard on a magnetic tape on which video data based on DV (Digital Video) standard developed by the HD Digital VCR Conference should be recorded.

However, for example, when a magnetic tape with data recorded in a plurality of data formats is played back, a control apparatus which wants to receive only one format cannot lock the data format to be output to the desired data format.

EP 1 052 574 provides a data transmission management method of, in a bus system having a plurality of instruments linked to each other, managing to establish and breaking a data transmission line between the instruments according to a response to an inquiry asking whether the data transmission or receipt is permitted or not.

EP1441535A2 proposes an apparatus for outputting AV-data on an IEEE 1394 serial bus. The apparatus can lock the data format to be output to either the "DV" data format or the "MPEG2" data format. However, it is not possible to unlock the setting of the data format, so that any of the two formats will be output.

EP1024493A2 discloses a system of one audio data outputting and one audio data receiving device linked by a serial bus according to IEEE 1394. Here, the receiving apparatus can lock or unlock settings for transmission rates in the sending apparatus.

### DISCLOSURE OF INVENTION

It is an object of the present invention is to overcome the above-described drawbacks. For example, it is an object of the present invention to provide an apparatus and a method which execute control to lock or not to lock the data format of output data output from one of output means of a video processing apparatus or input data input to one of input means to one data format.

According to a first aspect of the present invention, there is provided a control apparatus as specified in claims 1 to 4.

According to a second aspect of the present invention, there is provided a video processing apparatus as specified in claims 5 to 8.

According to a third aspect of the present invention, there is provided a control method as specified in claims 9 to 12.

According to a fourth aspect of the present invention, there is provided a control method as specified in claims 13 to 16.

Other objects and advantages besides those discussed above shall be apparent to those skilled in the art from the description of a preferred embodiment of the invention which follows. In the description, reference is made to accompanying drawings, which form a part hereof, and which illustrate an example of the invention. Such example, however, is not exhaustive of the various embodiments of the invention, and therefore reference is made to the claims which follow the description for determining the scope of the invention.

### BRIEF DESCRIPTION OF DRAWINGS

Fig. 1 is a view for explaining the arrangement of a control system according to the embodiment;
Fig. 2 is a view for explaining the major components of a digital video camera as an example of a video processing apparatus according to the embodiment;
Fig. 3 is a view showing an example of a plurality of AV data recorded on a recording medium (e.g., a magnetic tape);
Fig. 4 is a view for explaining an OUTPUT PLUG SIGNAL MODE command;
Fig. 5 is a view for explaining an INPUT PLUG SIGNAL MODE command;
Fig. 6 is a flowchart for explaining the processing procedures of the video processing apparatus upon receiving the OUTPUT PLUG SIGNAL MODE command; and
Fig. 7 is a flowchart for explaining the processing procedures of the video processing apparatus upon receiving the INPUT PLUG SIGNAL MODE command.

### BEST MODE FOR CARRYING OUT THE INVENTION

The preferred embodiment of the present invention will be described below with reference to the accompanying drawings. In this embodiment, data containing video data, audio data, and their additional data will be referred to as "AV data". An apparatus capable of inputting or outputting AV data in a plurality of kinds of data formats through a digital interface will be referred to as a "video processing apparatus". An apparatus having a function of controlling the video processing apparatus will be referred to as a "control apparatus". Hence, the video processing apparatus according to this embodiment includes a digital camera, digital video camera, cellular phone with a camera, and digital video recorder. The control apparatus includes a personal computer, portable computer, and digital TV broadcast receiving apparatus. In this embodiment, a data format based on DV standard will be referred to as a "DV format", AV data based on DV standard as "DV data", a data format based on MPEG2 standard as an "MPEG2 format", and AV data based on MPEG2 standard as "MPEG2 data".

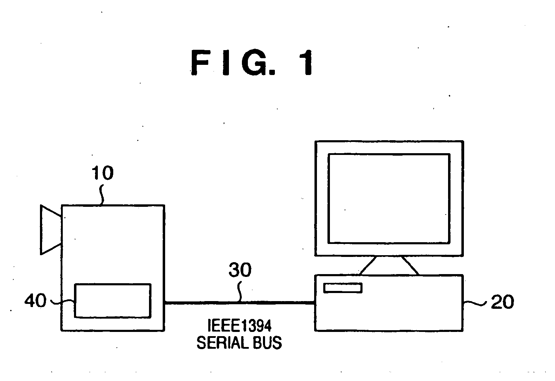

The arrangement of a control system according to this embodiment will be described first with reference to Fig. 1. Referring to Fig. 1, reference numeral 10 denotes a DVC (Digital Video Camera) as an example of the video processing apparatus according to this embodiment; and 20, a PC (Personal Computer) as an example of the control apparatus according to this embodiment. An IEEE 1394 serial bus 30 is an example of a transmission medium which connects the DVC 10 and PC 20. The DVC 10 and PC 20 are connected to the IEEE 1394 serial bus 30 through IEEE 1394 interfaces. A recording medium 40 can be attached to the video processing apparatus. In this embodiment, the recording medium 40 is a magnetic tape. However, the recording medium 40 is not limited to a magnetic tape, as a matter of course.

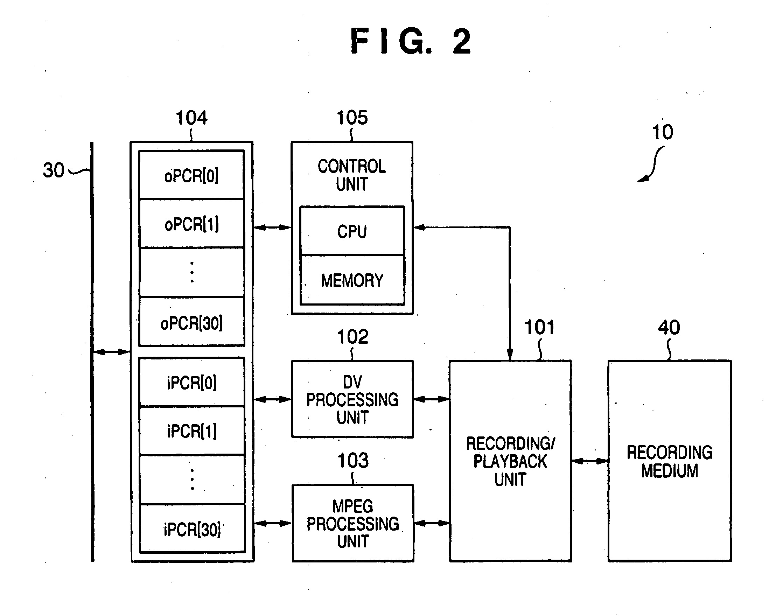

The major components of the DVC 10 as an example of the video processing apparatus according to this embodiment will be described next with reference to Fig. 2. A recording/playback unit 101 has a playback function of playing back data recorded on the recording medium 40 and a recording function of recording input data on the recording medium 40. A DV processing unit 102 processes DV data. An MPEG processing unit 103 processes MPEG2 data. An IEEE 1394 interface 104 can communicate with the IEEE 1394 interface of the PC 20. The IEEE 1394 interface 104 has 31 oPCRs (output Plug Control Registers) and 31 iPCRs (input Plug Control Registers). An oPCR is a logical output terminal defined by IEC 61883-1. An iPCR is a logical input terminal defined by IEC 61883-1. A control unit 105 has a CPU and a memory which stores programs (including a program to control the DVC 10) executable by the CPU.

In this embodiment, DV data played back from the recording medium 40 is transmitted to the PC 20 through the DV processing unit 102 and at least one oPCR. MPEG2 data played back from the recording medium 40 is transmitted to the PC 20 through the MPEG processing unit 103 and at least one oPCR.

In this embodiment, DV data transmitted from the PC 20 is recorded on the recording medium 40 through at least one iPCR and the DV processing unit 102. MPEG2 data transmitted from the PC 20 is recorded on the recording medium 40 through at least one iPCR and the MPEG processing unit 103.

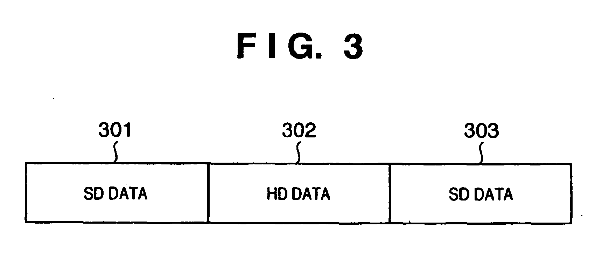

Fig. 3 is a view showing an example of a plurality of AV data recorded on the recording medium 40. Referring to Fig. 3, reference numerals 301 and 303 denote DV data; and 302, MPEG2 data. The DV data 301 and 303 contain video data, audio data, and their additional data. The MPEG2 data 302 contains video data, audio data, and their additional data. The resolution (image size) of the MPEG2 data 302 is higher (larger) than that of the DV data 301 and 303.

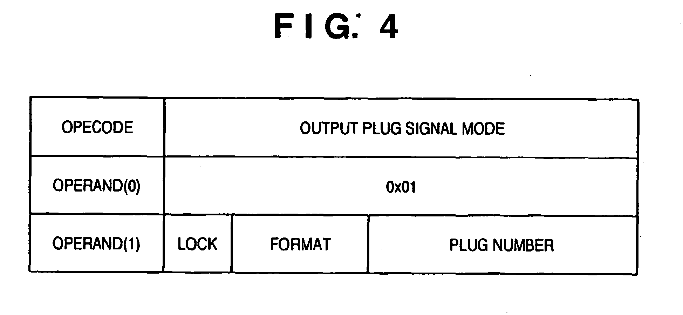

An OUTPUT PLUG SIGNAL MODE command used in this embodiment will be described next with reference to Fig. 4. The OUTPUT PLUG SIGNAL MODE command is one of commands which are transmitted from the PC 20 to the DVC 10. This command locks or unlocks one or all oPCRs to a desired data format. The OUTPUT PLUG SIGNAL MODE command is transmitted from the PC 20 to the DVC 10 by FCP (Function Control Protocol) defined by IEC 61883-1. The PC 20 can set each oPCR of the DVC 10 in a locked or unlocked state by using the OUTPUT PLUG SIGNAL MODE command.

Referring to Fig. 4, an OPECODE field stores a code indicating the OUTPUT PLUG SIGNAL MODE. An OPERAND(0) field stores "0x01". An OPERAND(1) field includes a lock field (LOCK), format field (FORMAT), and plug number field (PLUG NUMBER). If data which can be output from the DVC 10 can take four or more kinds of data formats, an OPERAND(2) field may be prepared in the OUTPUT PLUG SIGNAL MODE command, and a format field may be formed wholly or partially in the OPERAND(2) field.

The lock field stores a code (1 bit) indicating lock or unlock. When the code stored in the lock field is "1", the OUTPUT PLUG SIGNAL MODE command is an output lock command. When the code stored in the lock field is "O", the OUTPUT PLUG SIGNAL MODE command is an output unlock command. An output lock command indicates that the data format of data output from one or all oPCRs designated by the command is locked to a data format designated by the command. An output unlock command indicates that the data format of data output from one or all oPCRs designated by the command is not locked to one data format.

The format field stores a code (2 bits) indicating the data format to be locked. In this embodiment, when the data format to be locked is the DV format, "01" is stored in this field. When the data format to be locked is the MPEG2 format, "10" is stored in this field. When the OUTPUT PLUG SIGNAL MODE command is the unlock command, the format field is neglected.

The plug number field stores a code (5 bits) indicating the plug number of an oPCR to be locked or unlocked. To lock or unlock all oPCRs, all "1"s are stored in the plug number field.

For example, to lock the oPCR of plug number 0 to the DV format, the OPERAND(1) field of the output lock command stores "0xA0". To lock the oPCR of plug number 1 to the MPEG2 format, the OPERAND(1) field of the output lock command stores "0xC1".

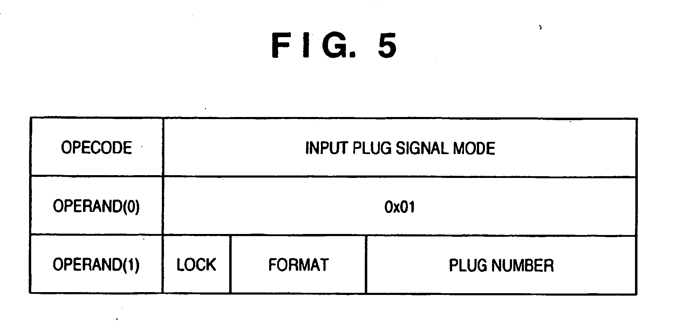

An INPUT PLUG SIGNAL MODE command used in this embodiment will be described next with reference to Fig. 5. The INPUT PLUG SIGNAL MODE command is one of commands which are transmitted from the PC 20 to the DVC 10. This command locks or unlocks one or all iPCRs to a desired data format. The INPUT PLUG SIGNAL MODE command is transmitted from the PC 20 to the DVC 10 by FCP, like the OUTPUT PLUG SIGNAL MODE command. The PC 20 can set each iPCR of the DVC 10 in a locked or unlocked state by using the INPUT PLUG SIGNAL MODE command.

Referring to Fig. 5, an OPECODE field stores a code indicating the INPUT PLUG SIGNAL MODE. An OPERAND(0) field stores "0x01". An OPERAND(1) field includes a lock field (LOCK), format field (FORMAT), and plug number field (PLUG NUMBER). If data which can be input to the DVC 10 can take four or more kinds of data formats, an OPERAND(2) field may be prepared in the INPUT PLUG SIGNAL MODE command, and a format field may be formed wholly or partially in the OPERAND(2) field.

The lock field stores a code (1 bit) indicating lock or unlock. When the code stored in the lock field is "1", the INPUT PLUG SIGNAL MODE command is an input lock command. When the code stored in the lock field is "0", the INPUT PLUG SIGNAL MODE command is an input unlock command. An input lock command indicates that the data format of data input to one or all iPCRs designated by the command is locked to a data format designated by the command. An input unlock command indicates that the data format of data input to one or all iPCRs designated by the command is not locked to one data format.

The format field stores a code (2 bits) indicating the data format to be locked. In this embodiment, when the data format to be locked is the DV format, "01" is stored in this field. When the data format to be locked is the MPEG2 format, "10" is stored in this field. When the INPUT PLUG SIGNAL MODE command is the unlock command, the format field is neglected.

The plug number field stores a code (5 bits) indicating the plug number of an iPCR to be locked or unlocked. To lock or unlock all iPCRs, all "1"s are stored in the plug number field.

For example, to lock the iPCR of plug number 0 to the DV format, the OPERAND(1) field of the input lock command stores "0xA0". To lock the iPCR of plug number 1 to the MPEG2 format, the OPERAND(1) field of the input lock command stores "0xC1".

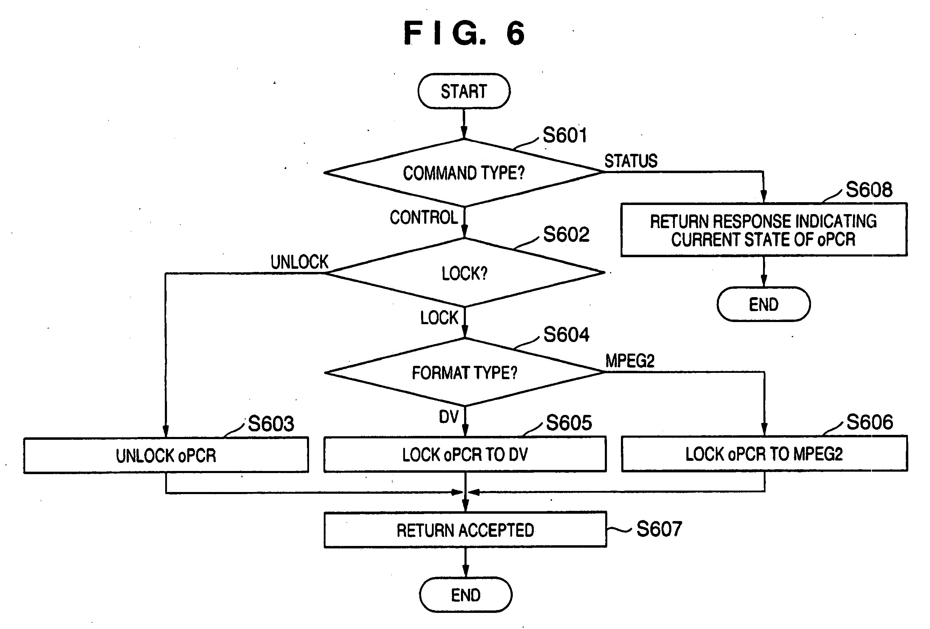

Processing procedures executed by the DVC 10 will be described next with reference to Fig. 6. Fig. 6 is a flowchart for explaining the processing procedures of the DVC 10 upon receiving the OUTPUT PLUG SIGNAL MODE command transmitted from the PC 20. The processing procedures shown in Fig. 6 indicate processing controlled by the control unit 105 in accordance with a predetermined program.

In step S601, the control unit 105 determines the type (command type) of the OUTPUT PLUG SIGNAL MODE command transmitted from the PC 20. The type of the OUTPUT PLUG SIGNAL MODE command can be determined by ctype defined by "AV/C Digital Interface Command Set General Specification Version 4.0, 1394 Trade Association". If the OUTPUT PLUG SIGNAL MODE command is a control command, the flow advances to step S602. If the OUTPUT PLUG SIGNAL MODE command is a status command, the flow advances to step S608.

In step S602, the control unit 105 determines whether the OUTPUT PLUG SIGNAL MODE command is an output lock command. If the OUTPUT PLUG SIGNAL MODE command is an output lock command, the flow advances to step S604. If the OUTPUT PLUG SIGNAL MODE command is an output unlock command, the flow advances to step S603.

In step S603, the control unit 105 unlocks the oPCR designated by the OUTPUT PLUG SIGNAL MODE command. That is, AV data output from the oPCR designated by the OUTPUT PLUG SIGNAL MODE command is not locked to one data format. Accordingly, DV data and MPEG2 data can be output from this oPCR.

In step S604, the control unit 105 determines the type (format type) of the data format designated by the OUTPUT PLUG SIGNAL MODE command. If the designated data format is the DV format, the flow advances to step S605. If the designated data format is the MPEG2 format, the flow advances to step S606.

In step S605, the control unit 105 locks the oPCR designated by the OUTPUT PLUG SIGNAL MODE command to the DV format. That is, AV data output from the oPCR designated by the OUTPUT PLUG SIGNAL MODE command is locked to the DV format. Accordingly, only DV data is output from this oPCR. Hence, when AV data except DV data played back from the recording medium 40 is supplied to the oPCR locked to the DV format, the IEEE 1394 interface 104 outputs not the AV data but only a CIP header indicating the DV format to the IEEE 1394 serial bus 30. The structure of the CIP header is described in detail in IEC 61883-1, IEC 61883-2, IEC 61883-3, IEC 61883-4, and IEC 61883-5, and a description thereof will be omitted.

In step S606, the control unit 105 locks the oPCR designated by the OUTPUT PLUG SIGNAL MODE command to the MPEG2 format. That is, AV data output from the oPCR designated by the OUTPUT PLUG SIGNAL MODE command is locked to the MPEG2 format. Accordingly, only MPEG2 data is output from this oPCR. Hence, when AV data except MPEG2 data played back from the recording medium 40 is supplied to the oPCR locked to the MPEG2 format, the IEEE 1394 interface 104 outputs not the AV data but only a CIP header indicating the MPEG2 format to the IEEE 1394 serial bus 30.

In step S607, the control unit 105 returns a response indicating ACCEPTED to the PC 20. The response indicating ACCEPTED represents that the OUTPUT PLUG SIGNAL MODE command is normally received.

In step S608, the control unit 105 returns, to the PC 20, a response indicating the current state of the oPCR designated by the plug number field of the OUTPUT PLUG SIGNAL MODE command. The response returned to the PC 20 contains a code indicating whether the oPCR designated by the OUTPUT PLUG SIGNAL MODE command is locked, and if the oPCR is locked, a code indicating the locked data format.

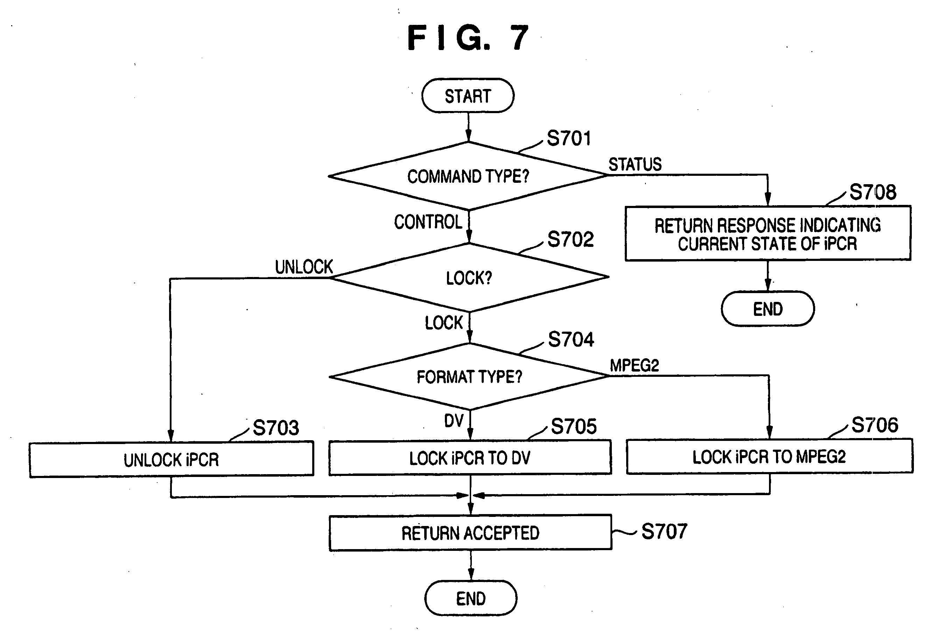

Processing procedures executed by the DVC 10 will be described next with reference to Fig. 7. Fig. 7 is a flowchart for explaining the processing procedures of the DVC 10 upon receiving the INPUT PLUG SIGNAL MODE command transmitted from the PC 20. The processing procedures shown in Fig. 7 indicate processing controlled by the control unit 105 in accordance with a predetermined program.

In step S701, the control unit 105 determines the type (command type) of the INPUT PLUG SIGNAL MODE command transmitted from the PC 20. The type of the INPUT PLUG SIGNAL MODE command can be determined by ctype defined by "AV/C Digital Interface Command Set General Specification Version 4.0, 1394 Trade Association". If the INPUT PLUG SIGNAL MODE command is a control command, the flow advances to step S702. If the INPUT PLUG SIGNAL MODE command is a status command, the flow advances to step S708.

In step S702, the control unit 105 determines whether the INPUT PLUG SIGNAL MODE command is an input lock command. If the INPUT PLUG SIGNAL MODE command is an input lock command, the flow advances to step S704. If the INPUT PLUG SIGNAL MODE command is an input unlock command, the flow advances to step S703.

In step S703, the control unit 105 unlocks the iPCR designated by the INPUT PLUG SIGNAL MODE command. That is, AV data input to the iPCR designated by the INPUT PLUG SIGNAL MODE command is not locked to one data format. Accordingly, DV data and MPEG2 data can be input to this iPCR.

In step S704, the control unit 105 determines the type (format type) of the data format designated by the INPUT PLUG SIGNAL MODE command. If the designated data format is the DV format, the flow advances to step S705. If the designated data format is the MPEG2 format, the flow advances to step S706.

In step S705, the control unit 105 locks the iPCR designated by the INPUT PLUG SIGNAL MODE command to the DV format. That is, AV data input to the iPCR designated by the INPUT PLUG SIGNAL MODE command is locked to the DV format. Accordingly, only DV data can be input to this iPCR.

In step S706, the control unit 105 locks the iPCR designated by the INPUT PLUG SIGNAL MODE command to the MPEG2 format. That is, AV data input to the iPCR designated by the INPUT PLUG SIGNAL MODE command is locked to the MPEG2 format. Accordingly, only MPEG2 data can be input to this iPCR.

In step S707, the control unit 105 returns a response indicating ACCEPTED to the PC 20. The response indicating ACCEPTED represents that the INPUT PLUG SIGNAL MODE command is normally received.

In step S708, the control unit 105 returns, to the PC 20, a response indicating the current state of the iPCR designated by the plug number field of the INPUT PLUG SIGNAL MODE command. The response returned to the PC 20 contains a code indicating whether the iPCR designated by the INPUT PLUG SIGNAL MODE command is locked, and if the iPCR is locked, a code indicating the locked data format.

As described above, according to this embodiment, the data format of output data output from one of the logical output terminals (oPCR) of the video processing apparatus (DVC 10) can be locked to one data format (DV format or MPEG2 format).

According to this embodiment, the data format of output data output from one of the logical output terminals (oPCR) of the video processing apparatus (DVC 10) can be prevented from being locked to one data format (DV format or MPEG2 format).

According to this embodiment, the data format of input data input to one of the logical input terminals (iPCR) of the video processing apparatus (DVC 10) can be locked to one data format (DV format or MPEG2 format).

According to this embodiment, the data format of input data input to one of the logical input terminals (iPCR) of the video processing apparatus (DVC 10) can be prevented from being locked to one data format (DV format or MPEG2 format).

The object of the present invention can also be achieved by supplying a storage medium which stores software program codes for implementing the functions of the above-described embodiment to a system or apparatus and causing the computer (or a CPU or MPU) of the system or apparatus to read out and execute the program codes stored in the storage medium.

In this case, the program codes read out from the storage medium implement the functions of the above-described embodiment by themselves, and the program codes themselves and the storage medium which stores them constitute the present invention.

As the storage medium for supplying the program codes, for example, a flexible disk, hard disk, optical disk, magnetooptical disk, CD-ROM, CD-R, magnetic tape, nonvolatile memory card, ROM, or the like can be used.

The functions of the above-described embodiment are implemented not only when the readout program codes are executed by the computer but also when the OS (fundamental system or operating system) running on the computer performs part or all of actual processing on the basis of the instructions of the program codes.

The functions of the above-described embodiment are also implemented when the program codes read out from the storage medium are written in the memory of a function expansion board inserted into the computer or a function expansion unit connected to the computer, and the CPU of the function expansion board or function expansion unit performs part or all of actual processing on the basis of the instructions of the program codes.

### INDUSTRIAL APPLICABILITY

The present invention is not limited to the above-described embodiment and can also be applied so various embodiments.

### CLAIM OF PRIORITY

This application claims priority from Japanese Patent Application No. 2003-420201 filed on December 17, 2003, the entire contents of which are incorporated herein by reference.

## Claims

1. A control apparatus (20) configured to control a video processing apparatus (10) to which it is connected via an IEEE 1394 serial bus (30), the video processing apparatus (10) comprising an IEEE 1394 interface (104) having a logical output terminal, the control apparatus (20) comprising:
command generation means configured to generate a command to control whether to lock a data format of a logical output terminal of the IEEE 1394 interface (104) of the video processing apparatus (10) to a predetermined data format; and
transmission means for transmitting the command to the video processing apparatus (10), the transmission means comprising an IEEE 1394 interface configured to connect the control apparatus (20) to the IEEE 1394 interface (104) of the video processing apparatus (10) for transmitting the command to the video processing apparatus (10) via the IEEE 1394 serial bus (30);
wherein the command generation means is configured to generate:
a first command to cause the video processing apparatus (10) to lock the data format of the logical output terminal to the predetermined data format so that the logical output terminal cannot output data whose data format is different from the predetermined data format, whereby if the data whose data format is different from the predetermined data format is supplied to the logical output terminal locked to the predetermined data format, the IEEE 1394 interface (104) will not output the data whose data format is different from the predetermined data format but will output a Common Isochronous Packet (CIP) header indicating the predetermined data format to the IEEE 1394 serial bus (30); and
a second command to cause the video processing apparatus (10) not to lock the data format of the logical output terminal to the predetermined data format so that the logical output terminal can output data whose data format is the predetermined data format and data whose data format is different from the predetermined data format.

2. The control apparatus (20) according to claim 1, wherein the logical output terminal is an oPCR (output Plug Control Register) defined by IEC 61883-1.

3. The control apparatus (20) according to claim 1, wherein the IEEE 1394 interface (104) of the video processing apparatus (10) further comprises a logical input terminal;
wherein the command generation means is further configured to generate a command to control whether to lock a data format of the logical input terminal of the video processing apparatus (10) to a predetermined data format; and
wherein the command generation means is further configured to generate:
a third command to cause the video processing apparatus (10) to lock the data format of the logical input terminal to the predetermined data format so that the logical input terminal cannot input data whose data format is different from the predetermined data format; and
a fourth command to cause the video processing apparatus (10) not to lock the data format of the logical input terminal to the predetermined data format so that the logical input terminal can input data whose data format is the predetermined data format and data whose data format is different from the predetermined data format.

4. The control apparatus (20) according to claim 3, wherein the logical input terminal is an iPCR (input Plug Control Register) defined by IEC 61883-1.

5. A video processing apparatus (10) which is controlled by a control apparatus (20) to which it is connected via an IEEE 1394 serial bus (30), the video processing apparatus (10) comprising:
reception means for receiving a command transmitted from the control apparatus (20), wherein the reception means comprises an IEEE 1394 interface (104) configured to connect the video processing apparatus (10) to an IEEE 1394 interface of the control apparatus (20) for receiving the command from the control apparatus (20) via the IEEE 1394 serial bus (30), and wherein the IEEE 1394 interface (104) of the reception means comprises a logical output terminal; and
control means (105) configured to control whether to lock a data format of the logical output terminal to a predetermined data format based on the command received by the reception means;
wherein:
if the command received by the reception means is a first command, the control means (105) is configured to lock the data format of the logical output terminal to the predetermined data format so that the logical output terminal cannot output data whose data format is different from the predetermined data format, wherein the logical output terminal of the IEEE 1394 interface (104) is configured to, when the data whose data format is different from the predetermined data format is supplied to the logical output terminal locked to the predetermined data format, control the IEEE 1394 interface (104) to not output the data whose data format is different from the predetermined data format but to output a Common Isochronous Packet (CIP) header indicating the predetermined data format to the IEEE 1394 serial bus (30); and
if the command received by the reception means is a second command, the control means (105) is configured not to lock the data format of the logical output terminal to the predetermined data format so that the logical output terminal can output data whose data format is the predetermined data format and data whose data format is different from the predetermined data format.

6. The video processing apparatus (10) according to claim 5, wherein the logical output terminal is an oPCR (output Plug Control Register) defined by IEC 61883-1.

7. The video processing apparatus (10) according to claim 5, wherein the IEEE 1394 interface (104) of the video processing apparatus (10) further comprises a logical input terminal;
wherein the control means (105) is configured to control whether to lock a data format of the logical input terminal to a predetermined data format based on the command received by the reception means; and
wherein:
if the command received by the reception means is a third command, the control means (105) is configured to lock the data format of the logical input terminal to the predetermined data format so that the logical input terminal cannot input data whose data format is different from the predetermined data format; and
if the command received by the reception means is a fourth command, the control means (105) is configured not to lock the data format of the logical input terminal to the predetermined data format so that the logical input terminal can input data whose data format is the predetermined data format and data whose data format is different from the predetermined data format.

8. The video processing apparatus (10) according to claim 7, wherein the logical input terminal is an iPCR (input Plug Control Register) defined by IEC 61883-1.

9. A control method of a control apparatus (20) for controlling a video processing apparatus (10) to which it is connected via an IEEE 1394 serial bus (30), the video processing apparatus (10) comprising an IEEE 1394 interface (104) having a logical output terminal, the control apparatus (20) comprising transmission means comprising an IEEE 1394 interface configured to connect the control apparatus (20) to the IEEE 1394 interface (104) of the video processing apparatus (10) for transmitting a command to the video processing apparatus (10) via the IEEE 1394 serial bus (30), the control method comprising:
a first and second command generation step of generating a command to control whether to lock a data format of a logical output terminal of the IEEE 1394 interface (104) of the video processing apparatus (10) to a predetermined data format; and
a transmission step of transmitting the command to the video processing apparatus (10);
wherein the first and second command generation step comprises:
generating a first command to cause the video processing apparatus (10) to lock the data format of the logical output terminal to the predetermined data format so that the logical output terminal cannot output data whose data format is different from the predetermined data format (S605, S606), whereby if the data whose data format is different from the predetermined data format is supplied to the logical output terminal locked to the predetermined data format, the IEEE 1394 interface (104) will not output the data whose data format is different from the predetermined data format but will output a Common Isochronous Packet (CIP) header indicating the predetermined data format to the IEEE 1394 serial bus (30); and
generating a second command to cause the video processing apparatus (10) not to lock the data format of the logical output terminal to the predetermined data format so that the logical output terminal can output data whose data format is the predetermined data format and data whose data format is different from the predetermined data format (S603).

10. The control method according to claim 9, wherein the logical output terminal is an oPCR (output Plug Control Register) defined by IEC 61883-1.

11. The control method according to claim 9, wherein the IEEE 1394 interface (104) of the video processing apparatus (10) comprises a logical input terminal;
wherein the control method further comprises a third and fourth command generation step of generating a command to control whether to lock a data format of the logical input terminal of the video processing apparatus (10) to a predetermined data format; and
wherein the third and fourth command generation step comprises:
generating a third command to cause the video processing apparatus (10) to lock the data format of the logical input terminal to the predetermined data format so that the logical input terminal cannot input data whose data format is different from the predetermined data format (S705, S706); and
generating a fourth command to cause the video processing apparatus (10) not to lock the data format of the logical input terminal to the predetermined data format so that the logical input terminal can input data whose data format is the predetermined data format and data whose data format is different from the predetermined data format (S703).

12. The control method according to claim 11, wherein the logical input terminal is an iPCR (input Plug Control Register) defined by IEC 61883-1.

13. A control method of a video processing apparatus (10) which is controlled by a control apparatus (20) to which it is connected via an IEEE 1394 serial bus (30), the video processing apparatus (10) comprising reception means comprising an IEEE 1394 interface (104) configured to connect the video processing apparatus (10) to an IEEE 1394 interface of the control apparatus (20) for receiving a command from the control apparatus (20) via the IEEE 1394 serial bus (30), the IEEE 1394 interface (104) of the reception means comprising a logical output terminal, the control method comprising:
a reception step of receiving a command transmitted from the control apparatus (20); and
a first control step of controlling whether to lock a data format of the logical output terminal to a predetermined data format based on the command received in the reception step;
wherein the first control step comprises:
if the command received in the reception step is a first command, locking the data format of the logical output terminal to the predetermined data format so that the logical output terminal cannot output data whose data format is different from the predetermined data format, wherein the first control step comprises, when the data whose data format is different from the predetermined data format is supplied to the logical output terminal locked to the predetermined data format, controlling the IEEE 1394 interface (104) to not output the data whose data format is different from the predetermined data format but to output a Common Isochronous Packet (CIP) header indicating the predetermined data format to the IEEE 1394 serial bus (30); and
if the command received in the reception step is a second command, not locking the data format of the logical output terminal to the predetermined data format so that the logical output terminal can output data whose data format is the predetermined data format and data whose data format is different from the predetermined data format.

14. The control method according to claim 13, wherein the logical output terminal is an oPCR (output Plug Control Register) defined by IEC 61883-1.

15. The control method according to claim 13, wherein the IEEE 1394 interface (104) of the video processing apparatus (10) comprises a logical input terminal;
wherein the control method further comprises a second control step of controlling whether to lock a data format of the logical input terminal to a predetermined data format based on the command received in the reception step; and
wherein the second control step comprises:
if the command received in the reception step is a third command, locking the data format of the logical input terminal to the predetermined data format so that the logical input terminal cannot input data whose data format is different from the predetermined data format; and
if the command received in the reception step is a fourth command, not locking the data format of the logical input terminal to the predetermined data format so that the logical input terminal can input data whose data format is the predetermined data format and data whose data format is different from the predetermined data format.

16. The control method according to claim 15, wherein the logical input terminal is an iPCR (input Plug Control Register) defined by IEC 61883-1.

17. A program which, when executed by a computer, causes the computer to carry out the control method according to any one of claims 9 to 16.

18. A storage medium storing the program according to claim 17.

## Patentansprüche

1. Steuervorrichtung (20), konfiguriert zum Steuern einer Videoverarbeitungsvorrichtung (10), an die sie über einen IEEE-1394-Serial-Bus (30) angeschlossen ist, wobei die Videoverarbeitungsvorrichtung (10) eine IEEE-1394-Schnittstelle (104) mit einem logischen Ausgangsanschluss umfasst, wobei die Steuervorrichtung (20) umfasst:
eine Befehlserzeugungseinrichtung, konfiguriert zum Erzeugen eines Befehls zum Steuern, ob ein Datenformat eines logischen Ausgangsanschlusses der IEEE-1394-Schnittstelle (104) der Videoverarbeitungsvorrichtung (10) auf ein vorbestimmtes Datenformat festzulegen ist; und
eine Übertragungseinrichtung zum Übertragen des Befehls an die Videoverarbeitungsvorrichtung (10), wobei die Übertragungseinrichtung eine IEEE-1394-Schnittstelle umfasst, konfiguriert zum Anschließen der Steuervorrichtung (20) an die IEEE-1394-Schnittstelle (104) der Videoverarbeitungsvorrichtung (10) zum Übertragen des Befehls an die Videoverarbeitungsvorrichtung (10) über den IEEE-1394-Serial-Bus (30);
wobei die Befehlserzeugungseinrichtung konfiguriert ist, um zu erzeugen:
einen ersten Befehl, um die Videoverarbeitungsvorrichtung (10) zu veranlassen, das Datenformat des logischen Ausgangsanschlusses auf das vorbestimmte Datenformat festzulegen, so dass der logische Ausgangsanschluss keine Daten ausgeben kann, deren Datenformat vom vorbestimmten Datenformat verschieden ist, wodurch dann, wenn Daten mit einem vom vorbestimmten Datenformat verschiedenen Datenformat an den auf das vorbestimmte Datenformat festgelegten logischen Ausgangsanschluss geliefert werden, die IEEE-1394-Schnittstelle (104) nicht die Daten ausgibt, deren Datenformat vom vorbestimmten Datenformat verschieden ist, sondern einen Common-Isochronous-Packet- (CIP-)Vorsatz, der das vorbestimmte Datenformat kennzeichnet, an den IEEE-1394-Serial-Bus (30) ausgibt; und
einen zweiten Befehl zum Veranlassen der Videoverarbeitungsvorrichtung (10), das Datenformat des logischen Ausgangsanschlusses nicht auf das vorbestimmte Datenformat festzulegen, so dass der logische Ausgangsanschluss Daten ausgeben kann, deren Datenformat dem vorbestimmten Datenformat entspricht, und Daten ausgeben kann, deren Datenformat vom vorbestimmten Datenformat verschieden ist.

2. Steuervorrichtung (20) nach Anspruch 1, wobei der logische Ausgangsanschluss ein oPCR (output Plug Control Register) ist, definiert durch IEC 61883-1.

3. Steuervorrichtung (20) nach Anspruch 1, wobei die IEEE-1394-Schnittstelle (104) der Videoverarbeitungsvorrichtung (10) ferner einen logischen Eingangsanschluss umfasst;
wobei die Befehlserzeugungseinrichtung ferner konfiguriert ist zum Erzeugen eines Befehls zum Steuern, ob ein Datenformat des logischen Eingangsanschlusses der Videoverarbeitungsvorrichtung (10) auf ein vorbestimmtes Datenformat festzulegen ist; und
wobei die Befehlserzeugungseinrichtung ferner konfiguriert ist, zu erzeugen:
einen dritten Befehl, um die Videoverarbeitungsvorrichtung (10) zu veranlassen, das Datenformat des logischen Eingangsanschlusses auf das vorbestimmte Datenformat festzulegen, so dass der logische Eingangsanschluss keine Daten eingeben kann, deren Datenformat vom vorbestimmten Datenformat verschieden ist; und
einen vierten Befehl, um die Videoverarbeitungsvorrichtung (10) zu veranlassen, das Datenformat des logischen Eingangsanschlusses nicht auf das vorbestimmte Datenformat festzulegen, so dass der logische Eingangsanschluss Daten eingeben kann, deren Datenformat dem vorbestimmten Datenformat entspricht, und Daten eingeben kann, deren Datenformat vom vorbestimmten Datenformat verschieden ist.

4. Steuervorrichtung (20) nach Anspruch 3, wobei der logische Eingangsanschluss ein iPCR (input Plug Control Register) ist, definiert durch IEC 61883-1.

5. Videoverarbeitungsvorrichtung (10), die von einer Steuervorrichtung (20) gesteuert wird, an die sie über einen IEEE-1394-Serial-Bus (30) angeschlossen ist, wobei die Videoverarbeitungsvorrichtung (10) umfasst:
eine Empfangseinrichtung zum Empfangen eines Befehls, der von der Steuervorrichtung (20) übertragen wurde, wobei die Empfangseinrichtung eine IEEE-1394-Schnittstelle (104) umfasst, konfiguriert zum Anschließen der Videoverarbeitungsvorrichtung (10) an eine IEEE-1394-Schnittstelle der Steuervorrichtung (20), um den Befehl von der Steuervorrichtung (20) über den IEEE-1394-Serial-Bus (30) zu empfangen, und wobei die IEEE-1394-Schnittstelle (104) der Empfangseinrichtung einen logischen Ausgangsanschluss umfasst; und
eine Steuereinrichtung (105), konfiguriert zum Steuern, ob ein Datenformat des logischen Ausgangsanschlusses auf ein vorbestimmtes Datenformat festzulegen ist, basierend auf dem von der Empfangseinrichtung empfangenen Befehl,
wobei:
wenn der von der Empfangseinrichtung empfangene Befehl ein erster Befehl ist, die Steuereinrichtung (105) konfiguriert ist zum Festlegen des Datenformats des logischen Ausgangsanschlusses auf das vorbestimmte Datenformat, so dass der logische Ausgangsanschluss keine Daten ausgeben kann, deren Datenformat vom vorbestimmten Datenformat verschieden ist, wobei der logische Ausgangsanschluss der IEEE-1394-Schnittstelle (104) konfiguriert ist, um, wenn die Daten mit einem vom vorbestimmten Datenformat verschiedenen Datenformat an den auf das vorbestimmte Dataformat festgelegten logischen Ausgangsanschluss geliefert werden, die IEEE-1394-Schnittstelle (104) so zu steuern, dass diese nicht die Daten ausgibt, deren Datenformat vom vorbestimmten Datenformat verschieden ist, sondern einen Common-Isochronous-Packet-(CIP-)Vorsatz, der das vorbestimmte Dataformat kennzeichnet, an den IEEE-1394-Serial-Bus (30) ausgibt; und
wenn der von der Empfangseinrichtung empfangene Befehl ein zweiter Befehl ist, die Steuereinrichtung (105) konfiguriert ist, das Datenformat des logischen Ausgangsanschlusses nicht auf das vorbestimmte Datenformat festzulegen, so dass der logische Ausgangsanschluss Daten ausgeben kann, deren Datenformat dem vorbestimmten Datenformat entspricht, und Daten ausgeben kann, deren Datenformat vom vorbestimmten Datenformat verschieden ist.

6. Videoverarbeitungsvorrichtung (10) nach Anspruch 5, wobei der logische Ausgangsanschluss ein oPCR (output Plug Control Register) ist, definiert durch IEC 61883-1.

7. Videoverarbeitungsvorrichtung (10) nach Anspruch 5, wobei die IEEE-1394-Schnittstelle (104) der Videoverarbeitungsvorrichtung (10) ferner einen logischen Eingangsanschluss umfasst;
wobei die Steuereinrichtung (105) konfiguriert ist, zu steuern, ob ein Datenformat des logischen Eingangsanschlusses auf ein vorbestimmtes Datenformat festzulegen ist, basierend auf dem von der Empfangseinrichtung empfangenen Befehl; und
wobei:
dann, wenn der von der Empfangseinrichtung empfangene Befehl ein dritter Befehl ist, die Steuereinrichtung (105) konfiguriert ist zum Festlegen des Datenformats des logischen Eingangsanschlusses auf das vorbestimmte Datenformat, so dass der logische Eingangsanschluss keine Daten eingeben kann, deren Datenformat vom vorbestimmten Datenformat verschieden ist; und
dann, wenn der von der Empfangseinrichtung empfangene Befehl ein vierter Befehl ist, die Steuereinrichtung (105) konfiguriert ist, das Datenformat des logischen Eingangsanschlusses nicht auf das vorbestimmte Datenformat festzulegen, so dass der logische Eingangsanschluss Daten eingeben kann, deren Datenformat dem vorbestimmten Datenformat entspricht, und Daten eingeben kann, deren Datenformat vom vorbestimmten Datenformat verschieden ist.

8. Videoverarbeitungsvorrichtung (10) nach Anspruch 7, wobei der der logische Eingangsanschluss ein iPCR (input Plug Control Register) ist, definiert durch IEC 61883-1.

9. Steuerverfahren einer Steuervorrichtung (20) zum Steuern einer Videoverarbeitungsvorrichtung (10), an die sie über einen IEEE-1394-Serial-Bus (30) angeschlossen ist, wobei die Videoverarbeitungsvorrichtung (10) eine IEEE-1394-Schnittstelle (104) mit einem logischen Ausgangsanschluss umfasst, wobei die Steuervorrichtung (20) eine Übertragungseinrichtung mit einer IEEE-1394-Schnittstelle, konfiguriert zum Anschließen der Steuervorrichtung (20) an die IEEE-1394-Schnittstelle (104) der Videoverarbeitungsvorrichtung (10), umfasst, um einen Befehl über den IEEE-1394-Serial-Bus (30) an die Videoverarbeitungsvorrichtung (10) zu übertragen, wobei das Steuerverfahren umfasst:
einen Befehlserzeugungsschritt für einen ersten und einen zweiten Befehl zum Erzeugen eines Befehls zum Steuern, ob ein Datenformat eines logischen Ausgangsanschlusses der IEEE-1394-Schnittstelle (104) der Videoverarbeitungsvorrichtung (10) auf ein vorbestimmtes Datenformat festzulegen ist; und
einen Übertragungsschritt des Übertragens des Befehls an die Videoverarbeitungsvorrichtung (10);
wobei der Befehlserzeugungsschritt für den ersten und den zweiten Befehl umfasst:
Erzeugen eines ersten Befehls, um die Videoverarbeitungsvorrichtung (10) zu veranlassen, das Datenformat des logischen Ausgangsanschlusses auf das vorbestimmte Datenformat festzulegen, so dass der logische Ausgangsanschluss keine Daten ausgeben kann, deren Datenformat vom vorbestimmten Datenformat verschieden ist (S605, S606), wodurch, wenn Daten mit einem vom vorbestimmten Datenformat verschiedenen Datenformat an den auf das vorbestimmte Datenformat festgelegten logischen Ausgangsanschluss geliefert werden, die IEEE-1394-Schnittstelle (104) nicht die Daten ausgibt, deren Datenformat vom vorbestimmten Datenformat verschieden ist, sondern einen Common-Isochronous-Packet-(CIP-)Vorsatz, der das vorbestimmte Datenformat kennzeichnet, an den IEEE-1394-Serial-Bus (30) ausgibt; und
Erzeugen eines zweiten Befehls, um die Videoverarbeitungsvorrichtung (10) zu veranlassen, das Datenformat des logischen Ausgangsanschlusses nicht auf das vorbestimmte Datenformat festzulegen, so dass der logische Ausgangsanschluss Daten ausgeben kann, deren Datenformat dem vorbestimmten Datenformat entspricht, und Daten ausgeben kann, deren Datenformat vom vorbestimmten Datenformat verschieden ist (S603).

10. Steuerverfahren nach Anspruch 9, wobei der logische Ausgangsanschluss ein oPCR (output Plug Control Register) ist, definiert durch IEC 61883-1.

11. Steuerverfahren nach Anspruch 9, wobei die IEEE-1394-Schnittstelle (104) der Videoverarbeitungsvorrichtung (10) einen logischen Eingangsanschluss umfasst;
wobei das Steuerverfahren ferner einen Befehlserzeugungsschritt für einen dritten und einen vierten Befehl zum Erzeugen eines Befehls umfasst zum Steuern, ob ein Datenformat des logischen Eingangsanschlusses der Videoverarbeitungsvorrichtung (10) auf ein vorbestimmtes Datenformat festzulegen ist; und
wobei der Befehlserzeugungsschritt für einen dritten und einen vierten Befehl umfasst:
das Erzeugen eines dritten Befehls, um die Videoverarbeitungsvorrichtung (10) zu veranlassen, das Datenformat des logischen Eingangsanschlusses auf das vorbestimmte Datenformat festzulegen, so dass der logische Eingangsanschluss keine Daten eingeben kann, deren Datenformat vom vorbestimmten Datenformat verschieden ist (S705, S706); und
Erzeugen eines vierten Befehls zum Veranlassen der Videoverarbeitungsvorrichtung (10), das Datenformat des logischen Eingangsanschlusses nicht auf das vorbestimmte Datenformat festzulegen, so dass der logische Eingangsanschluss Daten eingeben kann, deren Datenformat dem vorbestimmten Datenformat entspricht, und Daten eingeben kann, deren Datenformat vom vorbestimmten Datenformat verschieden ist (S703).

12. Steuerverfahren nach Anspruch 11, wobei der logische Eingangsanschluss ein iPCR (input Plug Control Register) ist, definiert durch IEC 61883-1.

13. Steuerverfahren einer Videoverarbeitungsvorrichtung (10), die von einer Steuervorrichtung (20) gesteuert wird, an die sie über einen IEEE-1394-Serial-Bus (30) angeschlossen ist, wobei die Videoverarbeitungsvorrichtung (10) eine Empfangseinrichtung mit einer IEEE-1394-Schnittstelle (104) umfasst, konfiguriert zum Anschließen der Videoverarbeitungsvorrichtung (10) an eine IEEE-1394-Schnittstelle der Steuervorrichtung (20) zum Empfangen eines Befehls von der Steuervorrichtung (20) über den IEEE-1394-Serial-Bus (30), wobei die IEEE-1394-Schnittstelle (104) der Empfangseinrichtung einen logischen Ausgangsanschluss umfasst, wobei das Verfahren umfasst:
einen Empfangsschritt des Empfangens eines Befehls, der von der Steuervorrichtung (20) übertragen wurde; und
einen ersten Steuerschritt des Steuerns, ob ein Datenformat des logischen Ausgangsanschlusses auf ein vorbestimmtes Datenformat festzulegen ist, basierend auf dem im Empfangsschritt empfangenen Befehl;
wobei der erste Steuerschritt umfasst:
wenn der im Empfangsschritt empfangene Befehl ein erster Befehl ist, Festlegen des Datenformats des logischen Ausgangsanschlusses auf das vorbestimmte Datenformat, so dass der logische Ausgangsanschluss keine Daten ausgeben kann, deren Datenformat vom vorbestimmten Datenformat verschieden ist, wobei der erste Steuerschritt dann, wenn die Daten mit einem vom vorbestimmten Datenformat verschiedenen Datenformat an den auf das vorbestimmte Datenformat festgelegten logischen Ausgangsanschluss geliefert werden, das Steuern der IEEE-1394-Schnittstelle (104) in der Weise umfasst, dass diese nicht die Daten ausgibt, deren Datenformat vom vorbestimmten Datenformat verschieden ist, sondern einen Common-Isochronous-Packet-(CIP-)Vorsatz, der das vorbestimmte Datenformat kennzeichnet, an den IEEE-1394-Serial-Bus (30) ausgibt; und
wenn der im Empfangsschritt empfangene Befehl ein zweiter Befehl ist, das Datenformat des logischen Ausgangsanschlusses nicht auf das vorbestimmte Datenformat festgelegt wird, so dass der logische Ausgangsanschluss Daten ausgeben kann, deren Datenformat dem vorbestimmten Datenformat entspricht, und Daten ausgeben kann, deren Datenformat vom vorbestimmten Datenformat verschieden ist.

14. Steuerverfahren nach Anspruch 13, wobei der logische Ausgangsanschluss ein oPCR (output Plug Control Register) ist, definiert durch IEC 61883-1.

15. Steuerverfahren nach Anspruch 13, wobei die IEEE-1394-Schnittstelle (104) der Videoverarbeitungsvorrichtung (10) einen logischen Eingangsanschluss umfasst;
wobei das Steuerverfahren ferner einen zweiten Steuerschritt des Steuerns, ob ein Datenformat des logischen Eingangsanschlusses auf ein vorbestimmtes Datenformat festzulegen ist, umfasst, basierend auf dem im Empfangsschritt empfangenen Befehl; und
wobei der zweite Steuerschritt umfasst:
wenn der im Empfangsschritt empfangene Befehl ein dritter Befehl ist, Festlegen des Datenformats des logischen Eingangsanschlusses auf das vorbestimmte Datenformat, so dass der logische Eingangsanschluss keine Daten eingeben kann, deren Datenformat vom vorbestimmten Datenformat verschieden ist; und
wenn der im Empfangsschritt empfangene Befehl ein vierter Befehl ist, das Datenformat des logischen Eingangsanschlusses nicht auf das vorbestimmte Datenformat festgelegt wird, so dass der logische Eingangsanschluss Daten eingeben kann, deren Datenformat dem vorbestimmten Datenformat entspricht, und Daten eingeben kann, deren Datenformat vom vorbestimmten Datenformat verschieden ist.

16. Steuerverfahren nach Anspruch 15, wobei der logische Eingangsanschluss ein iPCR (input Plug Control Register) ist, definiert durch IEC 61883-1.

17. Programm, das bei Ausführung durch einen Computer diesen veranlasst, das Steuerverfahren nach einem der Ansprüche 9 bis 16 durchzuführen.

18. Speichermedium, das das Programm nach Anspruch 17 speichert.

## Revendications

1. Appareil de commande (20) configuré pour commander un appareil de traitement vidéo (10) auquel il est connecté via un bus série IEEE 1394 (30), l'appareil de traitement vidéo (10) comprenant une interface IEEE 1394 (104) ayant une borne de sortie logique, l'appareil de commande (20) comprenant :
un moyen générateur de commande configuré pour générer une commande afin de commander le verrouillage ou non d'un format de données d'une borne de sortie logique de l'interface IEEE 1394 (104) de l'appareil de traitement vidéo (10) sur un format de données prédéterminé ; et
un moyen de transmission destiné à transmettre la commande à l'appareil de traitement vidéo (10), le moyen de transmission comprenant une interface IEEEE 1394 configurée pour connecter l'appareil de commande (20) à l'interface IEEE 1394 (104) de l'appareil de traitement vidéo (10) afin de transmettre la commande à l'appareil de traitement vidéo (10) via le bus série IEEE 1394 (30) ;
dans lequel le moyen générateur de commande est configuré pour générer :
une première commande destinée à faire en sorte que l'appareil de traitement vidéo (10) verrouille le format de données de la borne de sortie logique sur le format de données prédéterminé afin que la borne de sortie logique ne puisse pas fournir en sortie des données dont le format de données est différent du format de données prédéterminé, d'où il résulte que si les données dont le format de données est différent du format de données prédéterminé sont fournies à la borne de sortie logique verrouillée sur le format de données prédéterminé, l'interface IEEE 1394 (104) ne fournira pas en sortie les données dont le format de données est différent du format de données prédéterminé mais fournira en sortie un entête de Paquet Isochrone Commun (CIP, Common Isochronous Packet) indiquant au bus série IEEE 1394 (30) le format de données prédéterminé ; et
une deuxième commande destinée à faire en sorte que l'appareil de traitement vidéo (10) ne verrouille pas le format de données de la borne de sortie logique sur le format de données prédéterminé afin que la borne de sortie logique puisse fournir en sortie des données dont le format de données est le format de données prédéterminé et des données dont le format de données est différent du format de données prédéterminé.

2. Appareil de commande (20) selon la revendication 1, dans lequel la borne de sortie logique est un Registre de Commande de Fiche de sortie oPCR (output Control Register), défini par la norme IEC 61883-1.

3. Appareil de commande (20) selon la revendication 1, dans lequel l'interface IEEE 1394 (104) de l'appareil de traitement vidéo (10) comprend en outre une borne d'entrée logique;
dans lequel le moyen générateur de commande est en outre configuré pour générer une commande afin de commander le verrouillage ou non d'un format de données de la borne d'entrée logique de l'appareil de traitement vidéo (10) sur un format de données prédéterminé ; et
dans lequel le moyen générateur de commande est en outre configuré pour générer :
une troisième commande destinée à faire en sorte que l'appareil de traitement vidéo (10) verrouille le format de données de la borne d'entrée logique sur le format de données prédéterminé afin que la borne d'entrée logique ne puisse pas fournir en entrée de données dont le format de données est différent du format de données prédéterminé ; et
une quatrième commande destinée à faire en sorte que l'appareil de traitement vidéo (10) ne verrouille pas le format de données de la borne d'entrée logique sur le format de données prédéterminé afin que la borne d'entrée logique puisse fournir en entrée des données dont le format de données est le format de données prédéterminé et dont le format de données est différent du format de données prédéterminé.

4. Appareil de commande (20) selon la revendication 3, dans lequel la borne d'entrée logique est un Registre de Commande de Fiche d'entrée iPCR (input Plug Control Register) défini par la norme IEC 61883-1.

5. Appareil de traitement vidéo (10) qui est commandé par un appareil de commande (20) auquel il est connecté via un bus série IEEE 1394 (30), l'appareil de traitement vidéo (10) comprenant :
un moyen de réception destiné à recevoir une commande transmise par l'appareil de commande (20), dans lequel le moyen de réception comprend une interface IEEE 1394 (104) configurée pour connecter l'appareil de traitement vidéo (10) à une interface IEEE 1394 de l'appareil de commande (20) pour recevoir la commande de l'appareil de commande (20) via le bus série IEEE 1394 (30), et dans lequel l'interface IEEE 1394 (104) du moyen de réception comprend une borne de sortie logique ; et
un moyen de commande (105) configuré pour commander le verrouillage ou non d'un format de données de la borne de sortie logique sur un format de données prédéterminé sur la base de la commande reçue par le moyen de réception ;
dans lequel :
si la commande reçue par le moyen de réception est une première commande, le moyen de commande (105) est configuré pour verrouiller le format de données de la borne de sortie logique sur le format de données prédéterminé afin que la borne de sortie logique ne puisse pas fournir en sortie de données dont le format de données est différent du format de données prédéterminé, dans lequel la borne de sortie logique de l'interface IEEE 1394 (104) est configurée, lorsque les données dont le format de données est différent du format de données prédéterminé sont délivrées à la borne de sortie logique verrouillée sur le format de données prédéterminé, pour commander l'interface IEEE 1394 (104) afin qu'elle ne fournisse pas en sortie les données dont le format de données est différent du format de données prédéterminé mais qu'elle fournisse en sortie un entête de Paquet Isochrone Commun (CIP) indiquant au bus série IEEE 1394 (30) le format de données prédéterminé ; et
si la commande reçue par le moyen de réception est une deuxième commande, le moyen de commande (105) est configuré pour ne pas verrouiller le format de données de la borne de sortie logique sur le format de données prédéterminé afin que la borne de sortie logique puisse fournir en sortie des données dont le format de données est le format de données prédéterminé et des données dont le format de données est différent du format de données prédéterminé.

6. Appareil de traitement vidéo (10) selon la revendication 5, dans lequel la borne de sortie logique est un registre oPCR (Registre de Commande de Fiche de sortie) défini par la norme IEC 61883-1.

7. Appareil de traitement vidéo (10) selon la revendication 5, dans lequel l'interface IEEE 1394 (104) de l'appareil de traitement vidéo (10) comprend en outre une borne d'entrée logique ;
dans lequel le moyen de commande (105) est configuré pour commander le verrouillage ou non d'un format de données de la borne d'entrée logique sur un format de données prédéterminé sur la base de la commande reçue par le moyen de réception ; et
dans lequel :
si la commande reçue par le moyen de réception est une troisième commande, le moyen de commande (105) est configuré pour verrouiller le format de données de la borne d'entrée logique sur le format de données prédéterminé afin que la borne d'entrée logique ne puisse pas fournir en entrée de données dont le format de données est différent du format de données prédéterminé ; et
si la commande reçue par le moyen de réception est une quatrième commande, le moyen de commande (105) est configuré pour ne pas verrouiller le format de données de la borne d'entrée logique sur le format de données prédéterminé afin que la borne d'entrée logique puisse fournir en entrée des données dont le format de données est le format de données prédéterminé et des données dont le format de données est différent du format de données prédéterminé.

8. Appareil de traitement (10) selon la revendication 7, dans lequel la borne d'entrée logique est un registre iPCR (Registre de Commande de Fiche d'entrée) défini par la norme IEC 61883-1.

9. Procédé de commande d'un appareil de commande (20) destiné à commander un appareil de traitement vidéo (10) auquel il est connecté via un bus série IEEE 1394 (30), l'appareil de traitement vidéo (10) comprenant une interface IEEE 1394 (104) ayant une borne de sortie logique, l'appareil de commande (20) comprenant un moyen de transmission comprenant une interface IEEE 1394 configurée pour connecter l'appareil de commande (20) à l'interface IEEE 1394 (104) de l'appareil de traitement vidéo (10) pour transmettre une commande à l'appareil de traitement vidéo (10) via le bus série IEEE 1394 (30), le procédé de commande comprenant :
des première et deuxième étapes de génération de commande consistant à générer une commande pour commander le verrouillage ou non d'un format de données d'une borne de sortie logique de l'interface IEEE 1394 (104) de l'appareil de traitement vidéo (10) sur un format de données prédéterminé ; et
une étape de transmission consistant à transmettre la commande à l'appareil de traitement vidéo (10) ;
dans lequel les première et deuxième étapes de génération de commande comprennent :
le fait de générer une première commande pour faire en sorte que l'appareil de traitement vidéo (10) verrouille le format de données de la borne de sortie logique sur le format de données prédéterminé afin que la borne de sortie logique ne puisse pas fournir en sortie de données dont le format de données est différent du format de données prédéterminé (S605, S606), d'où il résulte que si les données dont le format de données est différent du format de données prédéterminé sont délivrées à la borne de sortie logique verrouillée sur le format de données prédéterminé, l'interface IEEE 1394 (104) ne fournira pas en sortie les données dont le format de données est différent du format de données prédéterminé, mais fournira en sortie un entête de Paquet Isochrone Commun (CIP) indiquant au bus série IEEE 1394 (30) le format de données prédéterminé ; et
le fait de générer une deuxième commande pour faire en sorte que l'appareil de traitement vidéo (10) ne verrouille pas le format de données de la borne de sortie logique sur le format de données prédéterminé afin que la borne de sortie logique puisse fournir en sortie des données dont le format de données est le format de données prédéterminé et des données dont le format de données est différent du format de données prédéterminé (S603).

10. Procédé de commande selon la revendication 9, dans lequel la borne de sortie logique est un registre oPCR (Registre de Commande de Fiche de sortie) défini par la norme IEC 61883-1.

11. Procédé de commande selon la revendication 9, dans lequel l'interface IEEE 1394 (104) de l'appareil de traitement vidéo (10) comprend une borne d'entrée logique ;
dans lequel le procédé de commande comprennent en outre des troisième et quatrième étapes de génération de commande consistant à générer une commande pour commander le verrouillage ou non d'un format de données de la borne de sortie logique de l'appareil de traitement vidéo (10) sur un format de données prédéterminé ; et
dans lequel les troisième et quatrième étapes de génération de commande comprennent :
le fait de générer une troisième commande pour faire en sorte que l'appareil de traitement vidéo (10) verrouille le format de données de la borne d'entrée logique sur le format de données prédéterminé afin que la borne d'entrée logique ne puisse pas fournir en entrée de données dont le format de données est différent du format de données prédéterminé (S705, S706) ; et
le fait de générer une quatrième commande pour faire en sorte que l'appareil de traitement vidéo (10) ne verrouille pas le format de données de la borne d'entrée logique sur le format de données prédéterminé afin que la borne d'entrée logique puisse fournir en entrée des données dont le format de données est le format de données prédéterminé et des données dont le format de données est différent du format de données prédéterminé (S703).

12. Procédé de commande selon la revendication 11, dans lequel la borne de sortie logique est un registre iPCR (Registre de Commande de Fiche de sortie) défini par la norme IEC 61883-1.

13. Procédé de commande d'un appareil de traitement vidéo (10) qui est commandé par un appareil de commande (20) auquel il est connecté via un bus série IEEE 1394 (30), l'appareil de traitement vidéo (10) comprenant un moyen de réception comprenant une interface IEEE 1394 (104) configurée pour connecter l'appareil de traitement vidéo (10) à une interface IEEE 1394 de l'appareil de commande (20) pour recevoir une commande de l'appareil de commande (20) via le bus série IEEE 1394 (30), l'interface IEEE 1394 (104) du moyen de réception comprenant une borne de sortie logique, le procédé de commande comprenant :
une étape de réception consistant à recevoir une commande transmise par l'appareil de commande (20) ; et
une première étape de commande consistant à commander le verrouillage ou non d'un format de données de la borne de sortie logique sur un format de données prédéterminé sur la base de la commande reçue lors de l'étape de réception ;
dans lequel la première étape de commande comprend :
si la commande reçue lors de l'étape de réception est une première commande, le verrouillage du format de données de la borne de sortie logique sur le format de données prédéterminé afin que la borne de sortie logique ne puisse pas fournir en sortie de données dont le format de données est différent du format de données prédéterminé, dans lequel la première étape de commande comprend, lorsque les données dont le format de données est différent du format de données prédéterminé sont délivrées à la borne de sortie logique verrouillée sur le format de données prédéterminé, la commande de l'interface IEEE 1394 (104) afin qu'elle ne fournisse pas en sortie de données dont le format de données est différent du format de données prédéterminé, mais qu'elle fournisse en sortie un entête de Paquet Isochrone Commun (CIP) indiquant au bus série IEEE 1394 (30) le format de données prédéterminé ; et
si la commande reçue lors de l'étape de réception est une deuxième commande, le fait de ne pas verrouiller le format de données de la borne de sortie logique sur le format de données prédéterminé afin que la borne de sortie logique puisse fournir en sortie des données dont le format de données est le format de données prédéterminé et des données dont le format de données est différent du format de données prédéterminé.

14. Procédé de commande selon la revendication 13, dans lequel la borne de sortie logique est un registre oPCR (Registre de Commande de Fiche de sortie) défini par la norme IEC 61883-1.

15. Procédé de commande selon la revendication 13, dans lequel l'interface IEEE 1394 (104) de l'appareil de traitement vidéo (10) comprend une borne d'entrée logique ;
dans lequel le procédé de commande comprend en outre une deuxième étape de commande consistant à commander le verrouillage ou non d'un format de données de la borne d'entrée logique sur un format de données prédéterminé sur la base de la commande reçue lors de l'étape de réception ; et
dans lequel la deuxième étape de commande comprend :
si la commande reçue lors de l'étape de réception est une troisième commande, le verrouillage du format de données de la borne d'entrée logique sur le format de données prédéterminé afin que la borne d'entrée logique ne puisse pas fournir en entrée de données dont le format de données est différent du format de données prédéterminé ; et
si la commande reçue lors de l'étape de réception est une quatrième commande, le fait de ne pas verrouiller le format de données de la borne d'entrée logique sur le format de données prédéterminé afin que la borne d'entrée logique puisse fournir en entrée des données dont le format de données est le format de données prédéterminé et des données dont le format de données est différent du format de données prédéterminé.

16. Procédé de commande selon la revendication 15, dans lequel la borne d'entrée logique est un registre iPCR (Registre de Commande de Fiche d'entrée) défini par la norme IEC 61883-1.

17. Programme qui, lorsqu'il est exécuté par un ordinateur, fait en sorte que l'ordinateur mette en oeuvre le procédé de commande selon l'une quelconque des revendications 9 à 16.

18. Support de stockage stockant le programme selon la revendication 17.
